# EUROPÄISCHE PATENTANMELDUNG

(11) **EP 3 336 118 A1**
(43) Veröffentlichungstag der Anmeldung: **20.06.2018**
(21) Anmeldenummer: 17192033.3
(22) Anmeldetag: 20.09.2017
(51) Int. Cl.: C08G 18/79, C07C 265/04, C08K 5/521, C08K 5/54, C08G 18/73, C08K 5/00, C08G 18/02, C08K 5/134, C09D 175/04, C08G 18/08

(54) **FARBSTABILE HÄRTERZUSAMMENSETZUNGEN ENTHALTEND POLYISOCYANATE (CYCLO)ALIPHATISCHER DIISOCYANATE**

(71) Anmelder: BASF SE, 67056 Ludwigshafen am Rhein (DE)
(72) Erfinder: Schaefer, Harald, 67056 Ludwigshafen (DE); Genger, Thomas, 67056 Ludwigshafen (DE); Emmerling, Sebastian, 67056 Ludwigshafen (DE)
(74) Vertreter: BASF IP Association

(57) **Zusammenfassung**

Die vorliegende Erfindung betrifft neue farbdriftstabile Zusammensetzungen von Polyisocyanate von (cyclo)aliphatischen Diisocyanaten.

## Beschreibung

Die vorliegende Erfindung betrifft neue farbdriftstabile Zusammensetzungen enthaltend Polyisocyanate von (cyclo)aliphatischen Diisocyanaten. Ferner betrifft die Erfindung ein Verfahren zur Stabilisierung von Polyisocyanatzusammensetzungen, ein Verfahren zur Herstellung von Polyurethanlacken sowie die Verwendung der farbdriftstabilen Zusammensetzung als Härter in Beschichtungsmitteln.

JP4178370 B2 beschreibt eine Lösung bestehend aus einem NCO-terminierten Urethan-Präpolymeren, insbesondere auf Basis Toluoldiisocyanat, einem Phosphor- und/oder Phosphonsäuresilylester und Lösungsmittel, sowie einen Klebstoff oder eine Anstrichfarbe unter Verwendung der Lösung.

In den Beispielen werden konkret drei Toluoldiisocyanat-, ein Methylendiphenyl-, und ein Hexamethylen-diisocyanat-basiertes Präpolymer beschrieben.

US 8552137 B2 beschreibt Silylverbindungen als Dehydratisierungsmittel (Wasserfänger), insbesondere in Bezug auf Feuchtigkeit in polaren Lösungsmitteln, bei polaren Polyisocyanaten. Das Polyisocyanat in den Beispielen ist ein hydrophiliertes Polyisocyanat enthaltend 4,66% Phosphatester eines polyethoxylierten Alkohols enthaltend 13 Kohlenstoffatome und sechs Ethylenoxid-Einheiten, mono-/di-substituiert im Verhältnis 70/30, sowie 4.66% Phosphatester eines polyethoxylierten Alkohols enthaltend acht Ethylenoxid-Einheiten; mono-/di-substituiert im Verhältnis 70/30, sowie 2,22 % Dimethylcyclohexylamin zur Neutralisation und liegt damit als hydrophiles Salz vor.

WO 2005/089085 beschreibt Polyisocyanatzusammensetzungen als Härter für 2K-Polyurethanlacke, die neben einem Katalysator für die Reaktion zwischen Isocyanatgruppen und dagegen reaktiven Gruppen eine Stabilisatormischung enthält, ausgewählt aus sterisch gehinderten Phenolen und sekundären Arylaminen sowie Trialkyl- oder Triarylphosphiten. Explizit offenbart wird in den Beispielen eine Polyisocyanatzusammensetzungen, das Isocyanurat Tolonate HDT, mit Dibutylzinndilaurat als Katalysator in Butylacetat/Methylamylketon/Xylol 1:1:0,5.

WO 2008/116895 beschreibt Polyisocyanatzusammensetzungen als Härter für 2K-Polyurethanlacke, die neben einem Katalysator für die Reaktion zwischen Isocyanatgruppen und dagegen reaktiven Gruppen eine Stabilisatormischung enthält, ausgewählt aus sterisch gehinderten Phenolen und Phosphonaten.

Die Farbstabilisierung gegen Drift kann noch weiter verbessert werden.

WO 2013060614 beschreibt Polyisocyanatzusammensetzungen, enthaltend (A) mindestens ein Polyisocyanat, erhältlich durch Umsetzung mindestens eines monomeren Isocyanats, (B) mindestens eine Lewis-saure organische Metallverbindung, die die Umsetzung von Isocyanatgruppen mit gegenüber Isocyanat reaktiven Gruppen zu beschleunigen vermag, (C) mindestens eine Bronsted-Säure mit einem pKs-Wert kleiner 4, (D) mindestens ein sterisch gehindertes Phenol, (E) mindestens ein Lösungsmittel, (F) gegebenenfalls andere lacktypische Additive. Bronsted-Säuren wie di-(2-ethyl-hexyl)-phosphat bilden in Anwesenheit von Dibutylzinndilaurat in lacktypischen Lösungsmitteln wie Butylacetat Niederschläge unter Bildung eines Komplexes enthaltend Zinn : Phosphor = 1:2.

Die Aufgabe der vorliegenden Erfindung bestand darin, lagerstabile Polyisocyanatzusammensetzungen bereitzustellen, die bereits einen Katalysator für die Reaktion zwischen Isocyanatgruppen und mit diesen reaktive Gruppen enthalten und bei Lagerung farbstabil sind, und deren Stabilisierungswirkung gegenüber dem Stand der Technik verbessert ist. Weiterhin sollen die Polyisocyanatzusammensetzungen keine starke Trübung aufweisen.

Die Aufgabe wurde gelöst durch Polyisocyanatzusammensetzungen, enthaltend
- (A) mindestens ein Polyisocyanat, erhältlich durch Umsetzung mindestens eines monomeren (cyclo)aliphatischen Isocyanats, wobei das mindestens eine Polyisocyanat einen NCO-Gehalt von mindestens 15 Gew.% aufweist,
- (B) mindestens ein Silylester ausgewählt aus der Gruppe Phosphorsäuresilylester und Phosphonsäuresilylester in einer Menge von 0,2 bis 300 Gew.ppm bezogen auf Komponente (A),
- (C) mindestens ein sterisch gehindertes Phenol,
- (D) mindestens eine Lewis-saure organische Metallverbindung, die die Umsetzung von Isocyanatgruppen mit gegenüber Isocyanat reaktiven Gruppen zu beschleunigen vermag,
- (E) mindestens ein Lösungsmittel,
- (F) optional mindestens ein weiteres Antioxidanz,
- (G) optional andere lacktypische Additive.

Derartige Polyisocyanatzusammensetzungen weisen eine gute Farbstabilität über den zeitlichen Verlauf in einer Lagerung auf ("Farbdrift") und können mit Komponenten, die gegenüber Isocyanat reaktive Gruppen enthalten, in Polyurethanlacken umgesetzt werden.

Weiterhin wurde ein Verfahren zur Stabilisierung der Polyisocyanatzusammensetzungen, ein Verfahren zur Herstellung von Polyurethanlacken sowie die Verwendung der Polyisocyanatzusammensetzungen als Härter in Beschichtungsmitteln gefunden.

Die eingesetzten monomeren Isocyanate können aliphatisch oder cycloaliphatisch sein, was in dieser Schrift kurz als (cyclo)aliphatisch bezeichnet wird. Besonders bevorzugt sind aliphatische Isocyanate.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen.

Es kommen prinzipiell auch höhere monomere Isocyanate mit im Mittel mehr als zwei Isocyanatgruppen in Betracht. Dafür eignen sich beispielsweise Triisocyanate wie Triisocyanatononan und 2'-Isocyanatoethyl-(2,6-diisocyanatohexanoat).

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanatohexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Iso-cyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0²⁶]decan-Isomerengemische.

Besonders bevorzugt sind 1,6-Hexamethylendiisocyanat, 1,5-Pentamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) können beispielsweise (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozess zurückgeführten Nebenprodukten. So erhaltene Diisocyanate weisen in der Regel einen sehr geringen oder sogar nicht messbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate an hydrolysierbarem Chlor weniger als 100 ppm auf, bevorzugt weniger als 50 ppm, insbesondere weniger als 30 ppm und speziell weniger als 20 ppm. Dies kann beispielsweise durch die ASTM-Vorschrift D4663-98 gemessen werden. Die Gehalte an gesamtem Chlor liegen beispielsweise bei unter 1000 ppm, bevorzugt unter 800 ppm und besonders bevorzugt unter 500 ppm (ermittelt per argentometrischer Titration nach Hydrolyse).

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt mindestens 15 Gew%, bevorzugt mindestens 20 Gew%. Besonders bevorzugt beträgt der Gehalt an Isocyanatgruppen nach der Oligomerisierung mindestens 20 Gew% und höchstens 30 Gew.%.

Bevorzugt handelt es sich bei den Polyisocyanaten (A) um folgende Verbindungen:
1) Isocyanuratgruppen aufweisende Polyisocyanate von aliphatischen und/oder cycloaliphatischen Diisocyanaten. Besonders bevorzugt sind hierbei Diisocyanate auf Basis von Hexamethylendiisocyanat und Isophorondiisocyanat. Bei den dabei vorliegenden Isocyanuraten handelt es sich insbesondere um Tris-isocyanatoalkyl-bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 15 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Allophanat-und/oder Urethangruppen enthalten, bevorzugt mit einem Gehalt gebundenen Alkohols von kleiner 2 % bezogen auf das Polyisocyanat.
2) Uretdiongruppen aufweisende Polyisocyanate mit aliphatisch und/oder cycloaliphatisch gebundenen Isocyanatgruppen, insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf.
   Dies umfasst auch Uretdion-/Isocyanurat-Gemische beliebiger Zusammensetzung, insbesondere mit einem Gehalt an monomerem Uretdion (Dimer) von 1-40%, insbesondere 3-15, insbesondere 5-10 %.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Allophanat- und/oder Urethangruppen aufweisende Polyisocyanate mit aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen entstehen. Diese Allophanat- und/oder Urethangruppen aufweisenden Polyisocyanate haben im Allgemeinen einen NCO-Gehalt von 15 bis 24 Gew.-% und eine mittlere NCO-Funktionalität von 2,0 bis 4,5. Solche Allophanat- und/oder Urethangruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Allophanat- und/oder Urethangruppen aufweisenden Polyisocyanate treten häufig in Mischformen mit den unter 1) genannten Polyisocyanaten auf.
5) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren, z.B. Phosphonium-hydrogen-difluorid, herstellbar.
6) Hyperverzweigte Polyisocyanate, wie sie beispielsweise bekannt sind aus der DE-A1 10013186 oder DE-A1 10013187.
7) Die genannten Polyisocyanate können nach deren Herstellung in Biuretgruppen- oder Allophanat/Urethan-Gruppen aufweisende Polyisocyanate mit cycloaliphatisch oder aliphatisch gebundenen Isocyanatgruppen, überführt werden. Die Bildung von Biuretgruppen erfolgt beispielsweise durch Zugabe von Wasser oder Umsetzung mit Aminen. Die Bildung von Allophanat-/Urethangruppen erfolgt durch Umsetzung mit ein-, zwei- oder mehrwertigen, bevorzugt einwertigen Alkoholen, optional in Gegenwart von geeigneten Katalysatoren. Diese Biuret- oder Allophanat-/Urethangruppen aufweisenden Polyisocyanate weisen im Allgemeinen einen NCO-Gehalt von 15 bis 25 Gew.-% und eine mittlere NCO-Funktionalität von 3 bis 8 auf.
8) Modifizierte Polyisocyanate für Dual Cure Anwendungen, d.h. Polyisocyanate, die neben den unter 1) - 7) beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat ausgewählt aus der Gruppe bestehend aus Isocyanuraten, Biureten, Allophanat- / (Urethan-) / Isocyanurat-Mischungen, asymmetrischen Isocyanuraten (Iminooxadiazindion), bevorzugt aus der Gruppe bestehend aus Isocyanuraten, Allophanat- / (Urethan-) / Isocyanurat-Mischungen, besonders bevorzugt handelt es sich um ein isocyanuratgruppenhaltiges Polyisocyanat.

In einer besonders bevorzugten Ausführungsform handelt es sich bei dem Polyisocyanat um Isocyanuratgruppen enthaltende Polyisocyanate von 1,6-Hexamethylendiisocyanat.

In einer weiteren bevorzugten Ausführungsform handelt es sich bei dem Polyisocyanat um ein Gemisch von Isocyanuratgruppen enthaltenden Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat um ein vornehmlich Isocyanuratgruppen enthaltendes Polyisocyanat, mit einer Viskosität von 500-4000 mPa*s, und/oder um ein niederviskoses Allophanat gegebenenfalls enthaltend Isocyanurat und/oder Urethan, mit einer Viskosität von 150-1600 mPa*s.

In dieser Schrift wird die Viskosität bei 23°C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008 / 68198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ und bevorzugt erfolgen wie in der WO 2005 / 087828 für Ammonium-alpha-hydroxycarboxylat-Katalysatoren beschrieben. Die Reaktion kann beispielsweise abgebrochen werden, wie dort von Seite 11, Zeile 12 bis Seite 12, Zeile 5 beschrieben, was hiermit durch Bezugnahme Bestandteil der vorliegenden Anmeldung sei.

Die Reaktion kann alternativ wie in der CN 10178994A oder CN 101805304 beschrieben erfolgen.

Bevorzugt erfolgt die Herstellung der Polyisocyanate unter Verwendung eines Katalysators basierend auf Ammoniumcarboxylat, Ammonium-α-hydroxyalkyl-carboxylat oder Ammoniumhydroxid.

Bei thermisch labilen Katalysatoren ist es weiterhin auch möglich, die Reaktion durch Erhitzen des Reaktionsgemischs auf eine Temperatur oberhalb von mindestens 80°C, bevorzugt mindestens 100°C, besonders bevorzugt mindestens 120 °C abzubrechen. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, und Carbamate wie Hydroxyalkylcarbamat.

Diese Verbindungen werden pur oder verdünnt in geeigneter Konzentration, die zum Reaktionsabbruch erforderlich ist, zugegeben.

Silylester (B) sind ausgewählt aus der Gruppe aus Phosphorsäuresilylester und Phosphonsäuresilylester.

Bevorzugt sind als Silylester (B) folgende Verbindungen:

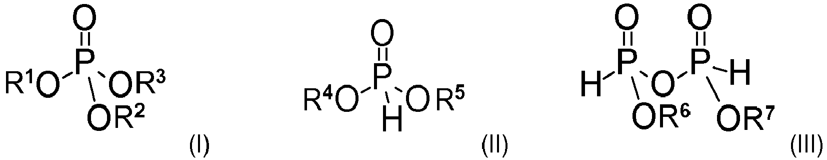

Darin bedeuten die Reste R¹ bis R⁷ jeweils unabhängig voneinander Trialkylsilylgruppe, Alkylgruppe oder Wasserstoff, wobei jede Verbindung mindestens eine Trialkylsilylgruppe enthalten muss. Bevorzugt sind die Reste R¹ bis R⁷ jeweils Trialkylsilylgruppen oder Alkylgruppen, wobei jede Verbindung mindestens eine Trialkylsilylgruppe enthalten muss. Besonders bevorzugt sind alle Reste R¹ bis R⁷ Trialkylsilylgruppen.

Die Alkylgruppen und die Alkylgruppen der Trialkylsilylgruppen sind bevorzugt C₁- bis C₁₈-Alkylgruppen.

Bevorzugt sind die Alkylgruppen der Trialkylsilylgruppen gleich.

Bevorzugt sind die Alkylgruppen der Trialkylsilylgruppen Methyl bzw. Ethyl, besonders bevorzugt Methyl.

Tris-(trimethylsilyl)-phosphorsäure ist die besonders bevorzugte Spezies.

Besonders bevorzugte Silylester (B) sind Phosphorsäuresilylester, insbesondere bevorzugt Phosphorsäure-tris-(silyl)-ester, ganz besonders bevorzugt Phosphorsäure-tris-(trimethylsilyl)-ester.

Die Silylester (B) werden in Mengen bezogen auf die Komponente (A) von 0,2 bis kleiner 300 Gew.ppm, bevorzugt von 1 bis 300 Gew.ppm, besonders bevorzugt von 10 bis 300 Gew.ppm, ganz besonders bevorzugt von 30 bis 200 Gew.ppm zugesetzt.

Sterisch gehinderte Phenole (C) haben im Sinne der Erfindung die Funktion eines primären Antioxidanz. Darunter werden vom Fachmann üblicherweise Verbindungen verstanden, die Radikale abfangen.

Derartige sterisch gehinderte Phenole sind beispielsweise beschrieben in WO 2008/116894, bevorzugt die dort von Seite 14, Zeile 10 bis Seite 16, Zeile 10 beschriebenen Verbindungen, was hiermit per Bezugnahme Bestandteil der vorliegenden Offenbarung sei.

Dabei handelt es sich bevorzugt um solche Phenole, die an dem aromatischen Ring genau eine phenolische Hydroxygruppe aufweisen und besonders bevorzugt um solche, die in den ortho-Positionen, ganz besonders bevorzugt in ortho- und para-Position zur phenolischen Hydroxygruppe einen Substituenten, bevorzugt eine Alkylgruppe aufweisen, insbesondere um Alkyl-3-(3,5-di-tert.-butyl-4-hydroxyphenyl)-propionate, respektive um substituierte Alkyl-Derivate solcher Verbindungen.

Solche Phenole können auch Bestandteile eines polyphenolischen Systems mit mehreren Phenol-Gruppen sein, Pentaerythrit-tetrakis(3-(3,5-di-tert.-butyl-4-hydroxyphenyl)propionat (z.B. lrganox® 1010); Ethylen-bis(oxyethylen)-bis-(3-(5-tert.-butyl-4-hydroxy-m-tolyl)-propionat) (z.B. lrganox® 245); 3,3',3",5,5',5"-Hexa-tert.-butyl-a,a',a"-(mesitylen-2,4,6-triyl)tri-p-kresol (z.B. lrganox® 1330); 1,3,5-Tris(3,5-di-tert.-butyl-4-hydroxybenzyl)-1,3,5-triazin-2,4,6(1H,3H,5H)-trion (z.B. lrganox® 3114), jeweils Produkte der Ciba Spezialitätenchemie, jetzt BASF SE.

Entsprechende Produkte sind z.B. unter den Handelsnamen lrganox® (BASF SE), Sumilizer® der Firma Sumitomo, Lowinox® der Fa. Great Lakes, Cyanox® der Fa. Cytec erhältlich.

Möglich sind auch z.B. Thiodiethylen-bis-[3-[3,5-di-tert.-butyl-4-hydroxyphenyl]-propionat] (z.B. lrganox® 1035) und 6,6'-Di-tert.-butyl-2,2'-thiodi-p-kresol (z.B. lrganox® 1081), jeweils Produkte BASF SE.

Bevorzugt sind 2,6-Bis-tert.-butyl-4-methyl-phenol (BHT), 3-[3,5-di-tert-butyl-4-hydroxyphenyl]-propionsäureester, Pentaerythrit-tetrakis(3-(3,5-di-tert-butyl-4-hydroxyphenyl)propionat (CAS-Nr. 6683-19-8; z.B. lrganox® 1010), 3,3',3",5,5',5"-Hexa-tert-butyl-a,a',a"-(mesitylen-2,4,6-triyl)tri-p-kresol (CAS-Nr. 1709-70-2; z.B. lrganox® 1330), 1,3,5-Tris(3,5-di-tert-butyl-4-hydroxybenzyl)-1,3,5-triazin-2,4,6(1H,3H,5H)-trion (CAS-Nr. 27676-62-6; z.B. lrganox® 3114), Isoctyl-3-(3,5-di-tert-butyl-4-hydroxyphenyl)-propionat (CAS-Nr. 146598-26-7, z.B. Irganox® 1135) und Octadecyl-3-(3,5-di-tert-butyl-4-hydroxyphenyl)-propionat (CAS-Nr. 2082-79-3, z.B. lrganox® 1076).

Besonders bevorzugt sind 2,6-Di-tert.-butyl-4-methylphenol (BHT); Isooctyl-3-(3,5-di-tert.-butyl-4-hydroxyphenyl)-propionat (CAS-Nr. 146598-26-7, z.B. lrganox® 1135), Octadecyl-3-(3,5-di-tert.-butyl-4-hydroxyphenyl)-propionat (CAS-Nr. 2082-79-3, lrganox® 1076) und Pentaerythrit-tetrakis(3-(3,5-di-tert.-butyl-4-hydroxyphenyl)-propionat (CAS-Nr. 6683-19-8; z.B. Irganox® 1010).

Als Lewis-saure organische Metallverbindungen (D) kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat.

Weitere bevorzugte Lewis-saure organische Metallverbindungen sind Zinksalze, beispielsweise Zink-(II)-diacetat und Zink-(II)-dioctoat.

Als Zinn- und Zink-freie Alternativen werden u.a. organische Metallsalze des Wismuts, Zirkons, Titans, Aluminiums, Eisens, Mangans, Nickels und Cobalts eingesetzt.

Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Wismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, Tego® der Firma Evonik, TIB Kat® der Fa. TIB Chemicals oder BICAT® der Firma Shepherd, Lausanne angeboten.

Auch Bismut- und Kobalt-Katalysatoren, Cer-Salze wie Ceroctoate, und Cäsiumsalze können als Katalysatoren eingesetzt werden.

Bismut-Katalysatoren sind insbesondere Bismut-carboxylate, insbesondere Bismut-octoate, -ethylhexanoate, -neodecanoate, oder -pivalate; beispielsweise K-KAT® 348 und XK-601 von King Industries, TIB KAT® 716, 716LA, 716XLA, 718, 720, 789 von TIB Chemicals und solchen von Shepherd Lausanne, sowie Katalysator-Mischungen von z.B. Bismut- und Zink-Organylen.

Weitere Metallkatalysatoren werden von Blank et al. in Progress in Organic Coatings, 1999, Vol. 35, Seiten 19-29 beschrieben.

Diese Katalysatoren sind für lösungsmittel-, wasser-basierte und/oder blockierte Systeme geeignet.

Molybdän-, Wolfram- und Vanadium-Katalysatoren, werden insbesondere für den Umsatz blockierter Polyisocyanate unter WO 2004/076519 und WO 2004/076520 beschrieben.

Auch Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Format, Acetat, Propionat, Hexanoat und 2-Ethylhexanoat.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-diacetat, Zink-(II)-dioctoat, Zirkon-Acetylacetonat und Zirkon-2,2,6,6-tetramethyl-3,5-heptandionat und Wismut-Verbindungen.

Besonders bevorzugt ist Dibutylzinndilaurat.

Des Weiteren ist noch mindestens ein Lösungsmittel (E) anwesend.

Als Lösungsmittel für die Polyisocyanatkomponente, wie auch die Bindemittel- und ggf. weitere Komponenten einsetzbar sind solche, die keine gegenüber Isocyanatgruppen oder verkappten Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, Ketone, Ester, alkoxylierte Alkansäurealkylester, Ether, Etherester, respektive Gemische der Lösungsmittel.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154-178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol® der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, iso-Butylacetat, Ethylacetat, 1-Methoxypropylacetat-2 und 2-Methoxyethylacetat.

Ether sind beispielsweise Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon, Cyclohexanon und tert-Butylmethylketon.

Etherester sind beispielsweise Ethylethoxypropionat EEP, Methoxymethylacetat, Butoxyethylacetat BGA, Ethoxy-1-methylethylacetat, Methoxy-1-methyl-ethylacetat.

Bevorzugte Lösungsmittel sind n-Butylacetat, Ethylacetat, 1-Methoxypropylacetat-2, 2-Methoxyethylacetat, Methylamylketon, sowie deren Gemische, insbesondere mit den oben aufgeführten aromatischen Kohlenwasserstoffgemischen, insbesondere Xylol und Solvesso® 100.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Es wurde gefunden, dass die Lösungsmittel in Bezug auf die Aufgabenstellung unterschiedlich problematisch sind. Polyisocyanatzusammensetzungen, welche Ketone oder Aromatengemische (beispielsweise Solvent Naphtha-Mischungen) enthalten, sind besonders kritisch in Bezug auf Farbzahlentstehung bei Lagerung. Dagegen sind Ester, Ether, engere Aromatenschnitte wie Xylol und dessen Isomerengemische unproblematischer. Überraschend ist dies insofern, als Xylole analog den Aromatengemischen ebenfalls benzylische Wasserstoff-Atome tragen, die an einer Farbentstehung beteiligt sein könnten. Dazu kommt, dass Solvent Naphtha-Mischungen abhängig von der Bezugsquelle und Lagerzeiten sich bei Einsatz in den Polyisocyanatzusammensetzungen deutlich unterschiedlich auf den Farbzahldrift auswirken können.

Weiterhin können weitere Antioxidanzien (F) anwesend sein.

Die weiteren Antioxidantien sind bevorzugt ausgewählt aus der Gruppe bestehend aus Phosphiten, Phosphoniten, Phosphonaten und Thioethern. Weitere primäre Antioxidanzien sind beispielsweise sekundäre Arylamine.

Phosphite sind Verbindungen des Typs P(OR^{a})(OR^{b}) (OR^{c}) mit R^{a}, R^{b}, R^{c} als gleichen oder unterschiedlichen aliphatischen oder aromatischen Resten (die auch cyclische oder spiro-Strukturen aufbauen können).

Bevorzugte Phosphonite sind beschrieben in WO 2008/116894, dort besonders von Seite 11, Zeile 8 bis Seite 14, Zeile 8, was hiermit per Bezugnahme Bestandteil der vorliegenden Offenbarung sei.

Bevorzugte Phosphonate sind beschrieben in WO 2008/116895, dort besonders von Seite 10, Zeile 38 bis Seite 12, Zeile 41, was hiermit per Bezugnahme Bestandteil der vorliegenden Offenbarung sei.

Besonders bevorzugt sind Mono- und Dialkylphosphonate sowie Dialkyldiphosphonate.

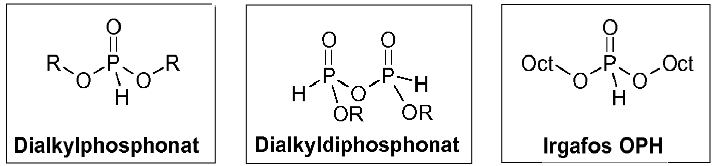

Beispiele dafür sind Mono- und Di-C₁- bis C₁₂-Alkylphosphonate und deren Gemische, bevorzugt die Dialkylphosphonate, besonders bevorzugt solche mit C₁- bis C₈-Alkylgruppen, ganz besonders bevorzugt mit C₁- bis C₈-Alkylgruppen und insbesondere solche mit C₁-, C₂-, C₄- oder C₈-Alkylgruppen.

Die Alkylgruppen in Dialkylphosphonaten können dabei gleich oder verschieden sein, bevorzugt sind sie gleich.

Beispiele für C₁- bis C₁₂-Alkylgruppen sind Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, 2-Ethylhexyl und 2-Propylheptyl, bevorzugt Phosphonsäuredi-n-octylester Irgafos® OPH (s. obige Abbildung), Phosphonsäuredi-n-butylester und Phosphonsäuredi-(2-ethyl-hexyl)-ester, insbesondere Phosphonsäuredi-n-octylester.

Phosphonsäuren werden in der Regel in Mengen bezogen auf das Polyisocyanat von 10 bis 1000, bevorzugt 20 bis 600, besonders bevorzugt 50 bis 300 Gew.ppm eingesetzt.

Bevorzugte Thioether sind beschrieben in WO 2008/116893, dort besonders von Seite 11, Zeile 1 bis Seite 15, Zeile 37, was hiermit per Bezugnahme Bestandteil der vorliegenden Offenbarung sei.

Als weitere lacktypische Additive (G) können beispielsweise verwendet werden: UV-Stabilisatoren wie UV-Absorber und geeignete Radikalfänger (insbesondere HALS-Verbindungen, Hindered Amin Light Stabilizer), Trockenmittel, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Geeignete UV-Absorber umfassen Oxanilide, Triazine und Benzotriazole (letztere erhältlich z.B. als Tinuvin® -Marken der BASF SE) und Benzophenone (z.B. Chimassorb® 81 der BASF SE). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly-(oxo-1,2-ethanediyl) (z.B. Tinuvin® 1130), jeweils Produkte z.B. der BASF SE. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF SE. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]methyl]butylmalonat (z.B. Tinuvin® 144 der BASF SE); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF SE); oder die N-(O-alkyliert) sind, wie z.B. Dekandisäure-bis-(2,2,6,6-tetramethyl-1-(octyloxy)-4-piperidinyl)-ester, Reaktionsprodukte mit 1,1-Dimethylethylhydroperoxyd und Oktan (z.B. Tinuvin® 123 der BASF SE), und speziell dem HALS-Triazin "2-Aminoethanol, Reaktionsprodukte mit Cyclohexan und peroxidiertem N-butyl-2,2,6,6-tetramethyl-4-piperidinamine-2,4,6-trichloro-1,3,5-triazin Reaktionsprodukt" (z.B. Tinuvin® 152 der BASF SE).

Trockenmittel sind beispielsweise para-Toluolsulfonylisocyanat (z.B. Additive TI der Fa. Borchers / OMG) und Ethylorthoformat (z.B. Additiv OF der Fa. Borchers /OMG).

UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (ko)polymerisierten (Ko)Polymeren, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Weiterhin können noch als Komponente (H) Füllstoffe, Farbstoffe und/oder Pigmente enthalten sein.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt. Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Zur Stabilisierung der Polyisocyanatzusammensetzungen werden dem mindestens einen Polyisocyanat (A) zusätzlich mindestens ein Silylester (B) in einer Menge von 0,2 bis 300 Gew.ppm bezogen auf Komponente (A), mindestens ein sterisch gehindertes Phenol (C), mindestens eine Lewis-saure organische Metallverbindung (D), mindestens ein Lösungsmittel (E), optional mindestens ein weiteres Antioxidanz (F), und optional andere lacktypische Komponenten (G) beigemengt.

In einer bevorzugten Ausführungsform werden in einem ersten Schritt Polyisocyanate (A), Silylester (B), sterisch gehindertes Phenol (C) und optional Lösungsmittel (E) in eine Polyisocyanatzusammensetzung überführt.

Bevorzugte Lösungsmittel in diesem ersten Schritt sind n-Butylacetat, Ethylacetat, 1-Methoxypropylacetat-2, 2-Methoxyethylacetat, Xylol, Solvesso® 100, sowie deren Gemische.

Die im ersten Schritt erhaltenen Polyisocyanatzusammensetzung werden dann in einem zweiten Schritt durch Zufügen weiterer der Komponenten, insbesondere Lewis-Säure (D) und Lösungsmittel (E) in eine erfindungsgemäße Polyisocyanatzusammensetzungen überführt. Gegebenenfalls können weitere Komponenten (A) bis (G) dazu gegeben werden.

Die erfindungsgemäßen Polyisocyanatzusammensetzungen sind beispielsweise wie folgt zusammengesetzt:
(A) 20 bis 99, bevorzugt 30 bis 95% Polyisocyanat, besonders bevorzugt 35 bis 90 Gew%, ganz besonders bevorzugt 40-80 Gew%,
(B) 0,2 bis 300 Gew.ppm Silylester, bevorzugt 30 bis 200 ppm,
(C) 20 bis 2000 Gew.ppm sterisch gehindertes Phenol, bevorzugt 50 bis 1000, besonders bevorzugt 100-600, ganz besonders bevorzugt 100-300,
(D) 5 bis 10000 Gew.ppm Lewis-Säure, bevorzugt 20 bis 2000 und besonders bevorzugt 50 bis 500 Gew.ppm, insbesondere 20 bis 300 Gew.ppm,
(E) 1 bis 80 Gew% Lösungsmittel, bevorzugt 5 bis 70 Gew% Lösungsmittel, besonders bevorzugt 10-65 Gew%, ganz besonders bevorzugt 20 bis 60 Gew%,
(F) 0 bis 1000 ppm je weiterem Antioxidanz, bevorzugt 50-700 ppm, besonders bevorzugt 100-300 ppm,
(G) 0-5 Gew% weitere Additive,
(H) gegebenenfalls zusätzlich zu den obigen Komponenten (A) bis (G) noch Füllstoffe, Farbstoffe und/oder Pigmente.
mit der Maßgabe, dass sich die Gew.-Angaben der Komponenten (B), (C), (D), (F), und (G) auf Polyisocyanat (A) beziehen und die Summe der Komponenten (A) und (E) immer 100 Gew% beträgt.

In einer bevorzugten Variante beträgt das Gewichtsverhältnis von dem mindestens einen Polyisocyanat (A) zu dem mindestens einen Lösungsmittel (E) 9:1 bis 2:8, besonders bevorzugt 9:1 bis 6:4.

Die erfindungsgemäßen Polyisocyanatzusammensetzungen können mit Vorteil als Härterkomponenten zusätzlich zu mindestens einem Bindemittel in Polyurethanlacken eingesetzt werden.

Zur Herstellung eines Polyurethanlackes werden die Polyisocyanatzusammensetzungen mit mindestens einem Bindemittel umgesetzt, welches gegenüber Isocyanat reaktive Gruppen enthält.

Die Umsetzung mit Bindemitteln kann dabei gegebenenfalls nach einem langen Zeitraum erfolgen, der eine entsprechende Lagerung der Polyisocyanatzusammensetzung erfordert. Die Lagerung von Polyisocyanatzusammensetzung erfolgt zwar bevorzugter weise bei Raumtemperatur, kann aber auch bei höheren Temperaturen erfolgen. In der Praxis sind Erwärmung solcher Polyisocyanatzusammensetzung bei Lagerung auf 30 °C, 40 °C, selbst bis 60 °C möglich.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyurethanpolyole, besonders bevorzugt Polyacrylatpolyole und Polyesterpolyole.

Bevorzugte OH-Zahlen, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Bindemittel eine Säurezahl gemäß DIN EN ISO 3682 (potentiometrisch) bis 200 mg KOH/g, bevorzugt bis 150 und besonders bevorzugt bis 100 mg KOH/g aufweisen.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Die hydroxyfunktionellen Monomere (siehe unten) werden in solchen Mengen bei der Kopolymerisation mitverwendet, dass die obengenannten Hydroxylzahlen der Polymere resultieren.

Dabei handelt es sich um hydroxygruppenhaltige Kopolymere aus mindestens einem hydroxygruppenhaltigen (Meth)acrylat mit mindestens einem weiteren polymerisationsfähigen Komonomer ausgewählt aus der Gruppe bestehend aus (Meth)acrylsäurealkylestern, Vinylaromaten, α, β-ungesättigten Carbonsäuren und anderen Monomeren.

Als (Meth)acrylsäurealkylestern genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Atome enthaltenden Alkoholen und, weniger bevorzugt, aliphatische Kohlenwasserstoffe mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α, β-Ungesättigte Carbonsäuren und deren Anhydride können beispielsweise sein: Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3-und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molekulargewicht zwischen 162 und 4500, bevorzugt 250 bis 2000, Poly-1,3-propandiol oder Polypropylenglykol mit einem Molekulargewicht zwischen 134 und 2000 oder Polyethylenglykol mit einem Molekulargewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butyl-styrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethylacrylamid oder -methacrylamid können in geringen Mengen mitverwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Iso-propylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die Hydroxygruppen tragenden Monomere werden in die Kopolymerisation der Hydroxygruppen tragenden (Meth)Acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den Hydroxygruppen tragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemischs vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Optional wird anschließend noch nachaktiviert, um die Polymerisation bis zu einem Umsatz von mindestens 99 % durchzuführen.

Weitere Bindemittel sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Hexahydrophthalsäureanhydrid, Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3-und 1,4-Cyclohexandimethanol, 1,2-, 1,3-oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxiliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Trimethylolpropan, Glycerin, Neopentylglykol, Ethylenglykol, Butan-1,4-diol, Hexan-1,6-diol, Octan-1,8-diol und Dodecan-1,12-diol.

Ferner kommen auch Polycarbonat-Diole in Betracht, wie sie z.B. durch Umsetzung von Phosgen mit einem Überschuss von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caproiacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caproiactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

In Polyurethanlacken sind Molmassen Mₙ der Polyester von 800 - 4000 g/mol üblich, wobei die hier verwendeten Polyester nicht darauf beschränkt sind.

Weiterhin sind als Bindemittel auch Polyetherole geeignet, die durch Addition von Ethylenoxid, Propylenoxid und/oder Butylenoxid, bevorzugt Ethylenoxid und/oder Propylenoxid und besonders bevorzugt Ethylenoxid an H-aktive Komponenten hergestellt werden. Ebenso sind Polykondensate aus Butandiol geeignet. In Polyurethanlacken sind Molmassen der Polyether von 500-2000 g/mol üblich, wobei die hier verwendeten Polyether nicht darauf beschränkt sind.

Die Polymere können zumindest teilweise durch sogenannte Reaktivverdünner ersetzt werden. Dabei kann es sich um blockierte sekundäre oder primäre Amine (Aldimine und Ketime) oder um Verbindungen mit sterisch gehinderten und / oder elektronenarmen sekundären Aminogruppen handeln, beispielsweise Asparaginsäureester gemäß EP 403921 oder WO 2007/39133.

Zur Härtung des Films werden Polyisocyanatzusammensetzung und Bindemittel in einem Molverhältnis von Isocyanatgruppen zu gegenüber Isocyanat reaktiven Gruppen von 0,2:1 bis 5:1, bevorzugt 0,8:1 bis 1,2:1 und speziell 0,9:1 bis 1,1:1 miteinander vermischt, wobei gegebenenfalls noch weitere lacktypische Bestandteile eingemischt werden können, und auf das Substrat aufgetragen und bei Umgebungstemperatur bis 150 °C ausgehärtet.

Das Lackgemisch wird bevorzugt bei einer Temperatur zwischen Raumtemperatur und 140 °C ausgehärtet.

In einer besonders bevorzugten Variante wird das Lackgemisch bei Umgebungstemperatur bis 80 °C, besonders bevorzugt bis 60 °C, ganz besonders bevorzugt bis 40 °C ausgehärtet. Die Härtung kann auch mit Infrarotstrahlung erfolgen. Bevorzugt handelt es sich dabei um solche Gegenstände, die nicht bei hohen Temperaturen gehärtet werden können, wie große Maschinen, Flugzeuge, Großraumfahrzeuge und Refinish-Anwendungen, gegebenenfalls Kunststoffe.

In einer anderen Anwendung wird das Lackgemisch bei 110-140 °C ausgehärtet (z.B. für OEM-Anwendungen).

Unter "Härtung" wird im Rahmen der vorliegenden Erfindung das Erzeugen einer klebfreien Beschichtung auf einem Substrat verstanden, indem man die auf das Substrat aufgetragene Beschichtungsmasse zumindest solange auf die oben angegebene Temperatur erwärmt, bis mindestens die gewünschte Klebfreiheit eingetreten ist.

Unter einer Beschichtungsmasse wird im Rahmen der vorliegenden Schrift eine Mischung zumindest der Komponenten verstanden, die zum Beschichten mindestens eines Substrats zum Zwecke einer Ausbildung eines Films und, nach Härtung, einer klebfreien Beschichtung vorgesehen ist.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm, insbesondere 20 bis 50 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können, bevorzugt Metallen, vorbeschichteten Oberflächen und Kunststoffen.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich (ACE), Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern, in Automobillacken als OEM und Refinish-Anwendung, besonders bevorzugt Refinish und Industrieanwendungen.

Insbesondere werden die erfindungsgemäßen Beschichtungsmassen als Klar-, Basis- und Decklacke(n), Topcoats, Primern und Füllern eingesetzt, bevorzugt als Klarlacke.

Derartige Polyisocyanatzusammensetzungen können als Härter in Lacken, Klebstoffen und Dichtungsmassen eingesetzt werden, bevorzugt werden sie in Lacken eingesetzt.

Es stellt einen Vorteil der erfindungsgemäßen Polyisocyanatzusammensetzungen dar, dass sie Polyisocyanatmischungen in Gegenwart von Urethanisierungskatalysatoren über einen langen Zeitraum farbstabil halten.

### Beispiele

### Einsatzstoffe:

Polyisocyanate (A): Isocyanurat auf Basis Hexamethylendiisocyanat

### Polyisocyanat (A1), Polyisocyanurat:

Hexamethylendiisocyanat HDI wurde in Anwesenheit von 80 ppm Benzyltrimethylammonium-hydroxyisobutyrat als Katalysator bezogen auf Hexamethylendiisocyanat, 60%-ig in Ethylenglykol, in einer mehrstufigen Reaktorkaskade bei 115, 120 und 130 °C umgesetzt. Hexamethylendiisocyanat wurde in einem mehrstufigen Verfahren mit HDI-Rückführung abdestilliert. NCO-Gehalt des Produkts: 22,2 %, Viskosität: 2675 mPa*s

### Polyisocyanat (A2), Polyisocyanurat:

Hexamethylendiisocyanat HDI wurde in Anwesenheit von 87 ppm Benzyltrimethylammonium-hydroxyisobutyrat als Katalysator bezogen auf Hexamethylendiisocyanat, 5%-ig in 2-Ethyl-hexanol, in einer mehrstufigen Reaktorkaskade bei 120 °C umgesetzt. Hexamethylendiisocyanat wurde in einem mehrstufigen Verfahren mit HDI-Rückführung abdestilliert. NCO-Gehalt des Produkts: 22,1 %, Viskosität: 2750 mPa*s.

Polyisocyanat (A3): Isocyanurat auf Basis Hexamethylendiisocyanat

Basonat HI 100 (BASF SE): NCO-Gehalt des Produkts: 22,0 %, Viskosität ca. 2900 mPa*s.

### Polyisocyanat (A4): Isocyanurat auf Basis Hexamethylendiisocyanat:

Hexamethylendiisocyanat HDI wurde in Anwesenheit von 66 ppm Benzyltrimethylammonium-hydroxyisobutyrat als Katalysator bezogen auf Hexamethylendiisocyanat, 5%-ig in 2-Ethylhexanol, in einer mehrstufigen Reaktorkaskade bei 100, 120 und 140 °C umgesetzt. Die Stoppung erfolgte thermisch bei 140 °C. Hexamethylendiisocyanat wurde in einem mehrstufigen Verfahren mit HDI-Rückführung abdestilliert. NCO-Gehalt des Produkts: 22,2 %, Viskosität: 2580 mPa*s.

**Silylderivate:**

| | |
|---|---|
| Tris-(trimethylsilyl)-phosphat | Fa. Sigma-Aldrich. - Erfindungsgemäß |
| Trifluoressigsäure-trimethylsilylester | Fa. Sigma-Aldrich. - Nicht erfindungsgemäß |
| N,O-Bis-(trimethylsilyl)-acetamid | Fa. Sigma-Aldrich. - Nicht erfindungsgemäß |
| 1,3-Bis-(trimethylsilyl)-harnstoff | Fa. Sigma-Aldrich. - Nicht erfindungsgemäß |
| Hexamethyldisilazan | Fa. Sigma-Aldrich. - Nicht erfindungsgemäß |

**Sterisch gehinderte Phenole (C):**

| | |
|---|---|
| Irganox® 1010: | Pentaerythrit-tetrakis-(3-(3,5-di-tert-butyl-4-hydroxyphenyl)-propionat, Fa. BASF SE |
| Irganox® 1076: | Octadecyl-3-(3,5-di-tert-butyl-4-hydroxyphenyl)-propionat, Fa. BASF SE |
| Irganox® 1135: | Isooctyl-3-(3,5-di-tert-butyl-4-hydroxyphenyl)-propionat; Fa. Fa BASF SE |

**Lewis-saure Katalysatoren (D):**

| | |
|---|---|
| DBTL | Dibutylzinndilaurat (DBTL): Fa. Sigma-Aldrich |

**Lösungsmittel (E):**

| | |
|---|---|
| Solvent Naphtha (Siedebereich ca. 170-180 °C) | |
| Methylamylketon | Fa. Sigma-Aldrich |

**Sekundäre Antioxidanzien (F):**

| | |
|---|---|
| Triphenylphosphit | Fa. Alfa Aesar |
| Tributylphosphit | Fa Sigma-Aldrich |
| Irgafos® OPH | Fa. BASF SE |

### Lagerversuche:

Die Polyisocyanate (A) wurden in 50 Gew.-% in Lösungsmittel (E) (1:1 in Gew.%) mit den in den Versuchen angegebenen Konzentrationen Silylester (B), Lewis-Säure-Katalysatoren (D), ggf. von sterisch gehinderten Phenolen (C), ggf. weiteren Additiven in fest verschlossenen Schraubdeckgefäßen (25 g in 30 mL-Gefäßen) bei 50 °C im Umluftofen zum Ausschluss von Luft unter Stickstoff gelagert. Spuren von Luft sind nicht ausgeschlossen.

Lagertest 1: 50 % Polyisocyanat (A), 50 % Solvesso® 100, 1000 Gew.ppm Dibutylzinn-dilaurat bezogen auf Polyisocyanat

Lagertest 2: 50 % Polyisocyanat (A), 50 % Methylamylketon, 1000 Gew.ppm Dibutylzinndilaurat bezogen auf Polyisocyanat

Die Konzentrationen der Verbindungen (B), (C), (D), (F) in Gew.ppm beziehen sich im jeweils unverdünnten Zustand der Verbindungen (B), (C), (D), (F) auf die Gesamtmenge Polyisocyanat (A).

Die Farbzahlen werden direkt (unmittelbar vor Beginn der Lagerung), und nach Lagerung über unterschiedliche Zeiträume gemessen. Die Farbzahlmessung erfolgt in APHA nach DIN EN 1557 auf einem Lico 150 der Firma Lange in einer 5 cm Messkuvette mit einem Volumen von 5 mL. Die Fehlertoleranzen betragen für den Sollwert 20 Hz (+/- 5, Ist-Wert 18 Hz); Sollwert 102 Hz (+/- 10, Ist-Wert 99 Hz); Sollwert 202 Hz (+/- 20, Ist-Wert 197 Hz). Die Farbzahlen werden direkt (unmittelbar vor Beginn der Lagerung), nach Lagerung nach 7; 28; 70 und gegebenenfalls nach 105 Tagen gemessen. Je niedriger die Farbzahlen desto besser.

Lagertest 1: 50 % Polyisocyanat, 50 % Solvesso® 100, 1000 ppm DBTL/Polyisocyanat

Serie 1 im Lagertest 1 auf Farbzahldrift einer Lösung bestehend aus 50 % Polyisocyanat A, 50 % Solvesso® 100, 1000 ppm DBTL/Polyisocyanat:

**Serie 1: Polyisocyanat (A1): Lagertest 1 (Solvesso® 100, DBTL**

| d/Hz | Additive (ppm) | 0 | 7 | 28 | 70 |
|---|---|---|---|---|---|
| V1 | 200 Irganox 1135 + 200 Tributylphosphit | 12 | 38 | 64 | 340 |
| B1 | 200 Irganox 1135 + 200 Tributylphosphit + 100 Tris-(trimethylsilyl)-phosphat | 12 | 18 | 39 | 108 |
| V2 | 200 Irganox 1010 + 200 Triphenylphosphit | 11 | 57 | 84 | 340 |
| B2 | 200 Irganox 1010 + 200 Triphenylphosphit + 100 Tris-(trimethylsilyl)-phosphat | 11 | 50 | 91 | 83 |
| V3 | 200 Irganox 1135 + 200 Triphenylphosphit | 14 | 70 | 81 | 174 |
| V4 | 200 Irganox 1135 + 200 Triphenylphosphit + 100 N,O-Bis-(trimethylsilyl)-acetamid | 14 | 52 | 172 | 395 |
| V5 | 200 Irganox 1135 + 200 Triphenylphosphit + 100 1,3-Bis-(trimethylsilyl)-harnstoff | 14 | 76 | 94 | 240 |
| V6 | 200 Irganox 1135 + 200 Triphenylphosphit + 100 Hexamethyldisilazan | 14 | 57 | 143 | 353 |
| B3 | 200 Irganox 1135 + 200 Triphenylphosphit + 100 Tris-(trimethylsilyl)-phosphat | 14 | 58 | 83 | 85 |
| V7 | 200 Irganox 1010 + 200 Irgafos OPH | 11 | 83 | 63 | 359 |
| B4 | 200 Irganox 1010 + 200 ppm Irgafos OPH + 100 Tris-(trimethylsilyl)-phosphat | 11 | 37 | 82 | 81 |
| V8 | 200 Irganox 1076 + 200 Irgafos OPH | 12 | 83 | 65 | 357 |
| B5 | 200 Irganox 1076 + 200 Irgafos OPH + 100 Tris-(trimethylsilyl)-phosphat | 12 | 41 | 87 | 121 |
| V9 | 200 Irganox 1135 + 200 Irgafos OPH | 17 | 42 | 113 | 233 |
| V10 | 200 Irganox 1135 + 200 Irgafos OPH + 100 N,O-Bis-(trimethylsilyl)-acetamid | 17 | 80 | 187 | 379 |
| V11 | 200 Irganox 1135 + 200 Irgafos OPH + 100 1,3-Bis-(trimethylsilyl)-harnstoff | 17 | 43 | 119 | 270 |
| V12 | 200 Irganox 1135 + 200 Irgafos OPH + 100 Hexamethyldisilazan | 17 | 80 | 184 | 369 |
| B6 | 200 Irganox 1135 + 200 Irgafos OPH + 100 Tris-(trimethylsilyl)-phosphat | 17 | 34 | 36 | 69 |

Ergebnis: Tris-(trimethylsilyl)-phosphat verbessert die Farbdriftstabilität in Verbindung mit phenolischen Antioxidanzien (C), gegebenenfalls mit einem weiteren Antioxidanz (F), auch gegenüber der Kombination von Phenol/Phosphit (vgl. WO 2005/089085) und Phenol/Phosphonat (Irgafos OPH; vgl. WO 2008/116894).

Tris-(trimethylsilyl)phosphat ist in den Beispielen das einzige wirksame Trimethylsilyl-basierte Additiv. N,O-Bis-(trimethylsilyl)-acetamid; 1,3-Bis-(trimethylsilyl)-harnstoff; und Hexamethyldisilazan sind schlechter [vgl. EP 1833785 B1 / US 8552137 B2].

**Serie 2: Polyisocyanat (A2): Lagertest 1 (Solvesso® 100, DBTL**

| d/Hz | Additive (ppm) | 0 | 7 | 28 | 70 |
|---|---|---|---|---|---|
| V13 | 200 Irganox 1135 + 200 Irgafos OPH | 10 | 39 | 63 | 141 |
| V14 | 200 Irganox 1135 + 200 Irgafos OPH + 50 Trifluoressigsäure-trimethylsilylester | 9 | 42 | 64 | 139 |
| V15 | 200 Irganox 1135 + 200 Irgafos OPH + 100 Trifluoressigsäure-trimethylsilylester | 8 | 44 | 71 | 174 |
| V16 | 200 Irganox 1135 + 200 Irgafos OPH + 50 Tetrakis-(trimethylsilyloxy)-silan | 10 | 36 | 57 | 126 |
| V17 | 200 Irganox 1135 + 200 Irgafos OPH + 100 Tetrakis-(trimethylsilyloxy)-silan | 10 | 31 | 53 | 154 |
| B7 | 200 Irganox 1135 + 200 Irgafos OPH + 50 Tris-(trimethylsilyl)-phosphat | 10 | 12 | 15 | 14 |
| B8 | 200 Irganox 1135 + 200 Irgafos OPH + 100 Tris-(trimethylsilyl)-phosphat | 10 | 10 | 15 | 14 |

Ergebnis: Tris-(trimethylsilyl)-phosphat ist das einzige wirksame Trimethylsilyl-basierte Additiv

**Serie 3: Polyisocyanat (A4): Lagertest 1 (Solvesso® 100, DBTL**

| d/Hz | Additive (ppm) | 0 | 7 | 28 | 70 |
|---|---|---|---|---|---|
| V18 | 200 Irganox 1135 + 200 Irgafos OPH | 17 | 22 | 43 | 116 |
| B9 | 200 Irganox 1135 + 200 Irgafos OPH + 100 Tris-(trimethylsilyl)-phosphat | 17 | 21 | 25 | 28 |

Ergebnis: Der Farbdrift mit Tris-(trimethylsilyl)-phosphat ist signifikant niedriger.

Lagertest 2: 50 % Polyisocyanat, 50 % Methylamylketon, 1000 ppm DBTL/Polyisocyanat

Folgende Lagertests wurden in der Lagertest 2-Rezeptur mit Methylamylketon und DBTL getestet.

**Serie 4: Polyisocyanat (A1): Lagertest 2**

| d/Hz | Additive (ppm) | 0 | 7 | 28 | 70 | 105 |
|---|---|---|---|---|---|---|
| V19 | 100 Tris-(trimethylsilyl)-phosphat | 22 | 43 | 72 | 106 | 143 |
| V20 | 200 Triphenylphosphit | 26 | 37 | 62 | 84 | 117 |
| V21 | 200 Triphenylphosphit + 100 Tris-(trimethylsilyl)-phosphat | 21 | 38 | 65 | 105 | 138 |
| V22 | 200 Irgafos OPH | 27 | 40 | 68 | 97 | 160 |
| V23 | 200 Irgafos OPH + 100 Tris-(trimethylsilyl)-phosphat | 25 | 38 | 65 | 107 | 141 |
| V24 | 200 Irganox 1135 | 27 | 35 | 55 | 88 | 116 |
| B10 | 200 Irganox 1135 + 100 Tris-(trimethylsilyl)-phosphat | 22 | 34 | 39 | 49 | 54 |
| V25 | 200 Irganox 1135 + 200 Tributylphosphit | 17 | 27 | 66 | 141 | 209 |
| B11 | 200 Irganox 1135 + 200 Tributylphosphit + 100 Tris-(trimethylsilyl)-phosphat | 18 | 18 | 24 | 36 | 43 |
| V26 | 200 Irganox 1010 + 200 Triphenylphosphit | 20 | 15 | 58 | 108 | 157 |
| B12 | 200 Irganox 1010 + 200 Triphenylphosphit + 100 Tris-(trimethylsilyl)-phosphat | 20 | 24 | 24 | 40 | 54 |
| V27 | 200 Irganox 1076 + 200 Triphenylphosphit | 19 | 21 | 62 | 112 | 193 |
| B13 | 200 Irganox 1076 + 200 Triphenylphosphit + 100 Tris-(trimethylsilyl)-phosphat | 19 | 20 | 32 | 39 | 48 |
| V28 | 200 Irganox 1135 + 200 Triphenylphosphit | 17 | 19 | 56 | 112 | 174 |
| B14 | 200 Irganox 1135 + 200 Triphenylphosphit + 50 Tris-(trimethylsilyl)-phosphat | 17 | 24 | 27 | 42 | 49 |
| B15 | 200 Irganox 1135 + 200 Triphenylphosphit + 100 Tris-(trimethylsilyl)-phosphat | 17 | 21 | 25 | 44 | 51 |
| V29 | 200 Irganox 1010 + 200 Irgafos OPH | 20 | 19 | 43 | 111 | 186 |
| B16 | 200 Irganox 1010 + 200 ppm Irgafos OPH + 100 Tris-(trimethylsilyl)-phosphat | 20 | 22 | 30 | 39 | 48 |
| V30 | 200 Irganox 1076 + 200 Irgafos OPH | 20 | 22 | 51 | 95 | 155 |
| B17 | 200 Irganox 1076 + 200 Irgafos OPH + 100 Tris-(trimethylsilyl)-phosphat | 20 | 20 | 29 | 41 | 48 |
| V31 | 200 Irganox 1135 + 200 Irgafos OPH | 17 | 28 | 48 | 129 | 198 |
| B18 | 200 Irganox 1135 + 200 Irgafos OPH + 1 ppm Tris-(trimethylsilyl)-phosphat | 17 | 30 | 58 | 111 | 143 |
| B19 | 200 Irganox 1135 + 200 Irgafos OPH + 5 ppm Tris-(trimethylsilyl)-phosphat | 17 | 16 | 43 | 90 | 117 |
| B20 | 200 Irganox 1135 + 200 Irgafos OPH + 10 ppm Tris-(trimethylsilyl)-phosphat | 17 | 15 | 24 | 89 | 115 |
| B21 | 200 Irganox 1135 + 200 Irgafos OPH + 20 ppm Tris-(trimethylsilyl)-phosphat | 17 | 17 | 19 | 76 | 110 |
| B22 | 200 Irganox 1135 + 200 Irgafos OPH + 50 ppm Tris-(trimethylsilyl)-phosphat | 17 | 18 | 14 | 22 | 21 |
| B23 | 200 Irganox 1135 + 200 Irgafos OPH + 100 ppm Tris-(trimethylsilyl)-phosphat | 17 | 16 | 22 | 22 | 17 |
| V32 | 200 Irganox 1135 + 200 Irgafos OPH + 300 ppm Tris-(trimethylsilyl)-phosphat | 17 | 23 | 21 | 31 | 31 |
| | | leicht trüb | | | | |
| V33 | 200 Irganox 1135 + 200 Irgafos OPH + 1000 ppm Tris-(trimethylsilyl)-phosphat | stark trüb | | | | |

Ergebnis: Tris-(trimethylsilyl)-phosphat verbessert die Farbdriftstabilität in Verbindung mit phenolischen Antioxidanzien (C), gegebenenfalls mit einem weiteren Antioxidanz (F). Ohne phenolisches Antioxidanz wird der Farbzahldrift nicht verbessert.

Im Bereich von 1 bis 100 ppm Tris-(trimethylsilyl)-phosphat gibt es klare Lösungen mit niedrigem Farbdrift, bei 300 ppm eine leichte Trübung mit niedrigem Farbdrift, bei 1000 ppm Tris-(trimethylsilyl)-phosphat eine starke Trübung.

**Serie 5: Polyisocyanat (A3): Lagertest 2 (Methylamylketon, DBTL)**

| d/Hz | Additive (ppm) | 0 | 7 | 28 | 70 | 105 |
|---|---|---|---|---|---|---|
| V34 | ohne | 13 | 30 | 60 | 85 | 109 |
| V35 | 50 Tris-(trimethylsilyl)-phosphat | 12 | 35 | 72 | 102 | 133 |
| V36 | 100 Tris-(trimethylsilyl)-phosphat | 12 | 34 | 70 | 100 | 132 |
| V37 | 200 Triphenylphosphit | 12 | 34 | 62 | 83 | 120 |
| V38 | 200 Triphenylphosphit + 100 Tris-(trimethylsilyl)-phosphat | 12 | 28 | 62 | 96 | 124 |
| V39 | 200 Irgafos OPH | 12 | 35 | 70 | 94 | 186 |
| V40 | 200 Irgafos OPH + 100 Tris-(trimethylsilyl)-phosphat | 12 | 32 | 70 | 102 | 133 |
| V41 | 200 Irganox 1135 | 12 | 30 | 46 | 79 | 116 |
| B24 | 200 Irganox 1135 + 100 Tris-(trimethylsilyl)-phosphat | 12 | 16 | 29 | 33 | 35 |
| V42 | 200 Irganox 1135 + 200 Tributylphosphit | 10 | 25 | 43 | 88 | 110 |
| B25 | 200 Irganox. 1135 + 200 Tributylphosphit + 100 Tris-(trimethylsilyl)-phosphat | 10 | 18 | 22 | 31 | 34 |
| V43 | 200 Irganox 1010 + 200 Triphenylphosphit | 11 | 26 | 41 | 86 | 108 |
| B26 | 200 Irganox 1010 + 200 Triphenylphosphit + 100 Tris-(trimethylsilyl)-phosphat | 11 | 18 | 23 | 33 | 46 |
| V44 | 200 Irganox 1135 + 200 Triphenylphosphit | 10 | 26 | 42 | 87 | 111 |
| B27 | 200 Irganox 1135 + 200 Triphenylphosphit + 50 Tris-(trimethylsilyl)-phosphat | 10 | 16 | 20 | 33 | 25 |
| B28 | 200 Irganox 1135 + 200 Triphenylphosphit + 100 Tris-(trimethylsilyl)-phosphat | 10 | 16 | 21 | 25 | 27 |
| B29 | 200 Irganox 1135 + 200 Triphenylphosphit + 300 Tris-(trimethylsilyl)-phosphat | 10 | 18 | 22 | 31 | 28 |
| V45 | 200 Irganox 1135 + 200 Triphenylphosphit + 1000 Tris-(trimethylsilyl)-phosphat | stark trüb | | | | |
| V46 | 200 Irganox 1076 + 200 Irgafos OPH | 9 | 21 | 33 | 72 | 159 |
| B30 | 200 Irganox 1076 + 200 Irgafos OPH + 100 Tris-(trimethylsilyl)-phosphat | 9 | 19 | 17 | 23 | 31 |
| V47 | 200 Irganox 1135 + 200 Irgafos OPH | 17 | 30 | 42 | 98 | 195 |
| B31 | 200 Irganox 1135 + 200 Irgafos OPH + 1 Tris-(trimethylsilyl)-phosphat | 17 | 23 | 26 | 84 | 109 |
| B32 | 200 Irganox 1135 + 200 Irgafos OPH + 5 Tris-(trimethylsilyl)-phosphat | 17 | 19 | 23 | 82 | 111 |
| B33 | 200 Irganox 1135 + 200 Irgafos OPH + 10 Tris-(trimethylsilyl)-phosphat | 17 | 20 | 25 | 44 | 47 |
| B34 | 200 Irganox 1135 + 200 Irgafos OPH + 20 Tris-(trimethylsilyl)-phosphat | 17 | 19 | 21 | 39 | 43 |
| B35 | 200 Irganox 1135 + 200 Irgafos OPH + 50 Tris-(trimethylsilyl)-phosphat | 17 | 18 | 22 | 39 | 42 |
| B36 | 200 Irganox 1135 + 200 Irgafos OPH + 100 Tris-(trimethylsilyl)-phosphat | 17 | 17 | 21 | 31 | 38 |
| B37 | 200 Irganox 1135 + 200 Irgafos OPH + 300 Tris-(trimethylsilyl)-phosphat | 17 | 19 | 23 | 39 | 40 |
| V48 | 200 Irganox 1135 + 200 Irgafos OPH + 1000 Tris-(trimethylsilyl)-phosphat | stark trüb | | | | |

Ergebnis: Tris-(trimethylsilyl)-phosphat verbessert die Farbdriftstabilität in Verbindung mit phenolischen Antioxidanzien (C), gegebenenfalls mit einem weiteren Antioxidanz (F). Ohne phenolisches Antioxidanz wird der Farbzahldrift nicht verbessert.

Im Bereich von 1 bis 300 ppm Tris-(trimethylsilyl)-phosphat gibt es klare Lösungen mit niedrigem Farbdrift, bei 1000 ppm Tris-(trimethylsilyl)-phosphat gibt es eine starke Trübung.

## Patentansprüche

1. Polyisocyanatzusammensetzungen, enthaltend
- (A) mindestens ein Polyisocyanat, erhältlich durch Umsetzung mindestens eines monomeren (cyclo)aliphatischen Isocyanats, wobei das mindestens eine Polyisocyanat einen NCO-Gehalt von mindestens 15 Gew.% aufweist,
- (B) mindestens ein Silylester ausgewählt aus der Gruppe Phosphorsäuresilylester und Phosphonsäuresilylester in einer Menge von 0,2 bis 300 Gew.ppm bezogen auf Komponente (A),
- (C) mindestens ein sterisch gehindertes Phenol,
- (D) mindestens eine Lewis-saure organische Metallverbindung, die die Umsetzung von Isocyanatgruppen mit gegenüber Isocyanat reaktiven Gruppen zu beschleunigen vermag,
- (E) mindestens ein Lösungsmittel,
- (F) optional mindestens ein weiteres Antioxidanz und
- (G) optional andere lacktypische Additive.

2. Polyisocyanatzusammensetzung nach Anspruch 1, **dadurch gekennzeichnet, dass** der mindestens eine Silylester (B) ein Phosphorsäuresilylester ist.

3. Polyisocyanatzusammensetzung nach Anspruch 1, **dadurch gekennzeichnet, dass** der mindestens eine Silylester (B) ein Phosphorsäure-tris-(silyl)-ester, bevorzugt Phosphorsäure-tris-(trimethylsilyl)-ester ist.

4. Polyisocyanatzusammensetzung nach einem der vorhergehenden Ansprüche, **dadurch gekennzeichnet, dass** der mindestens eine Silylester (B) in einer Menge von 10 bis 300 Gew.ppm, bevorzugt 30 bis 200 Gew.ppm bezogen auf Komponente (A) vorliegt.

5. Polyisocyanatzusammensetzung nach einem der vorhergehenden Ansprüche, **dadurch gekennzeichnet, dass** das mindestens eine (cyclo)aliphatische Isocyanat ausgewählt ist aus der Gruppe von Hexamethylendiisocyanat, Pentamethylendiisocyanat, Isophorondiisocyanat, 1,3-Bis-(iso-cyanatomethyl)-cyclohexan, 4,4'- Di(isocyanatocyclohexyl)methan und 2,4'-Di-(isocyanatocyclohexyl)-methan.

6. Polyisocyanatzusammensetzung nach einem der vorhergehenden Ansprüche, **dadurch gekennzeichnet, dass** das mindestens eine Polyisocyanat (A) unter Verwendung eines Katalysators basierend auf Ammoniumcarboxylat, Ammonium α-hydroxyalkyl-carboxylat oder Ammoniumhydroxid hergestellt wurde.

7. Polyisocyanatzusammensetzungen nach einem der vorhergehenden Ansprüche **dadurch gekennzeichnet, dass** das mindestens eine sterisch gehinderte Phenol (C) pro aromatischem Ring genau eine phenolische Hydroxygruppe aufweist und, dass mindestens eine ortho-Position, bevorzugt beide ortho-Positionen, bezogen auf die phenolische Hydroxygruppe eine gegebenenfalls substituierte tert.-Butyl-Gruppe trägt.

8. Polyisocyanatzusammensetzungen gemäß einem der vorhergehenden Ansprüche, **dadurch gekennzeichnet, dass** die mindestens eine Lewis-saure organische Metallverbindung (D) ein Metall enthält, ausgewählt aus der Gruppe bestehend aus Zinn, Zink, Titan, Zirkon, und Wismut.

9. Polyisocyanatzusammensetzung gemäß einem der vorhergehenden Ansprüche, **dadurch gekennzeichnet, dass** das Gewichtsverhältnis von dem mindestens einen Polyisocyanat (A) zu dem mindestens einen Lösungsmittel (E) 9:1 bis 2:8, insbesondere 9:1 bis 6:4 beträgt.

10. Polyisocyanatzusammensetzungen nach einem der vorhergehenden Ansprüche **dadurch gekennzeichnet, dass** das mindestens eine Lösungsmittel (E) ausgewählt ist aus der Gruppe bestehend aus aromatischen Kohlenwasserstoffen, (cyclo)aliphatischen Kohlenwasserstoffen, Ketonen, Estern, Ether, Etherestern und Carbonaten, insbesondere aus Destillationsschnitten aromatischer Kohlenwasserstoffe mit überwiegend Cg und C₁₀-Aromaten, und aus Dialkylketonen, ganz besonders aus Destillationsschnitten aromatischer Kohlenwasserstoffe mit überwiegend Cg und C₁₀-Aromaten.

11. Polyisocyanatzusammensetzungen nach einem der vorhergehenden Ansprüche **dadurch gekennzeichnet, dass** das mindestens eine weitere Antioxidanz (F) vorhanden ist und ausgewählt ist aus der Gruppe Phosphite, Phosphonate, Phosphonite und Thioethern.

12. Verfahren zur Stabilisierung von Polyisocyanatzusammensetzungen nach einem der vorhergehenden Ansprüche, bei dem man dem mindestens einen Polyisocyanat (A) zusätzlich mindestens einen Silylester (B) in einer Menge von 0,2 bis 300 Gew.ppm bezogen auf Komponente (A), mindestens ein sterisch gehindertes Phenol (C), mindestens eine Lewis-saure organische Metallverbindung (D), mindestens ein Lösungsmittel (E), optional mindestens ein weiteres Antioxidanz (F), und gegebenenfalls andere lacktypische Komponenten (G) beimengt.

13. Verfahren zur Herstellung von Polyurethanlacken, **dadurch gekennzeichnet, dass** man eine Polyisocyanatzusammensetzung gemäß einem der Ansprüche 1 bis 11 mit mindestens einem Bindemittel umsetzt, welches gegenüber Isocyanat reaktive Gruppen enthält.

14. Verfahren zur Herstellung von Polyurethanlacken, **dadurch gekennzeichnet, dass** man eine Polyisocyanatzusammensetzung gemäß einem der Ansprüche 1 bis 11 mit mindestens einem Bindemittel ausgewählt aus der Gruppe bestehend aus Polyacrylatpolyolen, Polyesterpolyolen, Polyetherpolyolen, Polyurethanpolyolen, Polyharnstoffpolyolen, Polyetherolen, Polycarbonaten, Polyesterpolyacrylatpolyolen, Polyesterpolyurethanpolyolen, Polyurethanpolyacrylatpolyolen, Polyurethanmodifizierten Alkydharzen, Fettsäuremodifizierten Polyesterpolyurethanpolyolen, Kopolymerisaten mit Allylethern und Co- bzw. Pfropfpolymerisaten aus den genannten Stoffgruppen umsetzt.

15. Verwendung von Polyisocyanatkomponenten gemäß einem der Ansprüche 1 bis 11 als Härter in Beschichtungsmitteln in Grundierungen, Füllern, pigmentierten Decklacken, Basislacken und Klarlacken im Bereich Autoreparatur- oder Großfahrzeuglackierung sowie bei Nutzfahrzeugen im landwirtschaftlichen und Baubereich.
